# EUROPÄISCHE PATENTSCHRIFT

(11) **EP 0 447 531 B1**
(45) Veröffentlichungstag und Bekanntmachung des Hinweises auf die Patenterteilung: **20.04.1994**
(21) Anmeldenummer: 90915117.7
(22) Anmeldetag: 11.10.1990
(51) Int. Cl.: A61C 19/04, G01B 11/24

(54) **VERFAHREN UND VORRICHTUNG ZUR DREIDIMENSIONALEN OPTISCHEN VERMESSUNG VON INSBESONDERE ZÄHNEN IN DER MUNDHÖHLE VON PATIENTEN**
PROCESS AND DEVICE FOR THE THREE-DIMENSIONAL OPTICAL MEASUREMENT, ESPECIALLY OF TEETH IN PATIENTS' BUCCAL CAVITIES
PROCEDE ET DISPOSITIF POUR LE MESURAGE OPTIQUE TRIDIMENSIONNEL DE CORPS, NOTAMMENT DE DENTS, DANS LA CAVITE BUCCALE D'UN PATIENT

(30) Priorität: 11.10.1989 DE 3933994
(43) Veröffentlichungstag der Anmeldung: 25.09.1991
(73) Patentinhaber: KALTENBACH & VOIGT GMBH & CO., 88400 Biberach (DE)
(72) Erfinder: MASSEN, Robert, D-7760 Radolfszell 18 (DE); GÄSSLER, Joachim, D-7716 Geisingen 3 (DE); KONZ, Christian, D-7763 Öhningen 2 (DE); VOLK, Gerhard, D-7790 Messkirch 3 (DE)
(74) Vertreter: Schmidt-Evers, Jürgen, Dipl.-Ing.
(86) Internationale Anmeldenummer: EP9001715
(87) Internationale Veröffentlichungsnummer: WO9105520

(56) Entgegenhaltungen:
- EP-A- 0 278 882
- EP-A- 0 305 107
- EP-A- 0 364 907

## Beschreibung

Die Erfindung betrifft ein Verfahren und eine Vorrichtung zur dreidimensionalen optischen Vermessung von Oberflächen bzw. Körpern, insbesondere von Zähnen oder Zahngruppen in der Mundhöhle von Patienten, nach den Oberbegriffen der Patentansprüche 1 und 4 bis 6.

Aus der EP-A1 0278 882 ist eine derartige Vorrichtung bekannt, die mittels eines sog. Triangulationsverfahrens die Oberfläche von Zähnen zwecks Herstellung von Zahnprothesen vermißt. Bei dieser optischen dreidimensionalen Vermessung wird ein Streifenmuster auf den jeweils zu vermessenden Zahn projiziert und dieses ist dann unter einem Parallaxwinkel betrachtet. Aus den dabei beobachteten Verformungen des Streifenmusters läßt sich die Topographie des vermessenen Zahnes errechnen. Auch das sog. Cerec-System der Firma Siemens beschäftigt sich unter Verwendung des Triangulationsverfahrens mit der computergestützten Herstellung von Keramikinlays für Zähne. Die Vermessung eines Zahnes oder einer Zahngruppe erfolgt bei diesen bekannten Verfahren dadurch, daß der Zahnarzt die Sonde innerhalb der Mundhöhle des Patienten zeitlich nacheinander manuell in verschiedene Positionen relativ zum Zahn bringt, um einander überlappende Teilansichten des Zahnes aufzunehmen, die dann mittels des Rechners zu einem Gesamtbild zusammengesetzt werden. Aufgrund ihrer manuellen Handhabung durch den Zahnarzt befindet sich die Sonde während der Aufnahme der verschiedenen Teilansichten in unbestimmten Positionen, die nicht im definierten Verhältnis zueinander stehen. Infolgedessen können die einzelnen Teilansichten nur dann zu einem die Topographie des vermessenen Zahnes korrekt darstellenden Gesamtbild zusammengesetzt werden, wenn Kalibrationskörper in der Mundhöhle oder an den Zähnen des Patienten so befestigt werden, daß sie mit jeder Teilansicht mit vermessen werden können, um dem Rechner die korrekte Zuordnung der einzelnen Teilansichten zueinander zu ermöglichen.

Es ist Aufgabe der Erfindung, ein Verfahren und eine Vorrichtung der eingangs genannten Art so weiterzubilden, daß Vermessungen ohne Verwendung von Hilfsmitteln, wie beipsielsweise Kalibrierkörpern, einfacher, schneller und genauer durchgeführt werden können.

Diese Aufgabe wird hinsichtlich des Verfahrens dadurch gelöst, daß die Beleuchtung der einzelnen Teilansichten und die Aufnahme der jeweils reflektierten Lichtmuster durchgeführt wird: entweder nacheinander mittels der wenigstens zwei Optiken, welche zu diesem Zweck innerhalb der Sonde aufeinanderfolgend in definierte, den einzelnen Teilansichten zugeordnete Positionen verschoben werden, oder gleichzeitig oder nacheinander mit mehr als zwei Optiken, die innerhalb der Sonde ortsfest in definierten, den einzelnen Teilansichten jeweils zugeordneten Positionen angebracht sind, wobei die Sonde in einer einzigen und damit bezüglich der gegenseitigen Zuordnung der einzelnen Teilansichten definierten Position gehalten wird.

Vorzugsweise wird nach dem Prinzip der Triangulation verfahren, wobei mittels jeweils einer Optik ein Streifenmuster auf die einzelnen Teilansichten projiziert und mittels einer anderen Optik das jeweils reflektierte, entsprechend der Topographie der jeweils vermessenen Teilansicht verformte Streifenmuster aufgenommen und als Grundlage zur Erzeugung der elektrischen Datensignale verwendet wird. Die Vorteile dieses Triangulationsverfahrens gegenüber dem interferometrischen Moiré-Verfahren besteht u.a. darin, daß kein kohärentes Licht erforderlich ist und keine Specklemuster auftreten.

Gemäß einer Weiterbildung des erfindungsgemäßen Verfahrens wird das Phasenshift-Prinzip angewendet, bei dem ein Streifenmuster mit einer durch eine Sinuskurve darstellbaren Helligkeitsverteilung mit jeweils verschiedener Phase wenigstens dreimal auf jede Teilansicht projiziert und das reflektierte Streifenmuster aufgenommen wird. Das die Gleichung jeder Sinuskurve drei Unbekannte, nämlich die Grundhelligkeit, den Helligkeitskontrast und die Phase der jeweiligen Wellenfront enthält, dienen die drei durchgeführten Aufnahmen zur Ermittlung der gesuchten Phase, wobei gleiche Phasen Punkte gleicher Höhe am vermessenen Körper darstellen. Der Vorteil gegenüber dem statische Streifenmuster projizierenden Verfahren liegt in der kontinuierlichen, flächenhaften Information im Gegensatz zu diskreten Konturlinien. Damit können Auflösungen erreicht werden, die im Bereich von wenigen Mikrometern liegen.

Zur Durchführung der Verfahrensvariante mit gleichzeitiger Beleuchtung der einzelnen Teilansichten und der Aufnahme der jeweils reflektierten Lichtmuster ist eine Vorrichtung vorgesehen, bei der dieZahl der jeweils zwei mit festgelegtem Abstand einander paarweise zugeordneten Optiken gleich der Anzahl der Teilansichten und ihre Anordnung innerhalb der Sonde ortsfest sowie gleich der gegenseitigen Anordnung der Teilansichten ist, wobei die eine der jeweils zwei einander paarweise zugeordneten Optiken an die Lichtquelle und die andere an den Bildsensor angeschlossen ist.

Zur Durchführung der zweiten Verfahrensvariante mit aufeinanderfolgender Beleuchtung der einzelnen Teilansichten und der Aufnahme der jeweils reflektierten Lichtmuster ist eine Vorrichtung vorgesehen, bei der die Zahl der Optiken gleich der Anzahl der Teilansichten und ihre Anordnung innerhalb der Sonde ortsfest und gleich der gegenseitigen Anordnung der Teilansichten ist, wobei ein Multiplexer zum paarweisen gleichzeitigen Anschließen jeweils zweier Optiken an die Lichtquelle bzw. an den Bildsensor vorgesehen ist. Dabei können für diesen Anschluß entweder benachbarte oder nicht-benachtbart Optiken vorgesehen sein.

Die aufeinanderfolgende Beleuchtung der einzelnen Teilansichten und die Aufnahme der jeweils reflektierten Streifenmuster kann gemäß der dritten Verfahrensvariante mit einer Vorrichtung durchgeführt werden, bei der die wenigstens zwei mit festgelegtem Abstand einander paarweise zugeordneten Optiken in definierten, der Breite der Teilansichten entsprechenden Schritten innerhalb der Sonde entlang einer der gegenseitigen Anordnung der Teilansichten zugeordneten Bahn verschiebbar und über einen Multiplexer an die Lichtquelle bzw. an den Bildsensor anschließbar sind.

Vorzugsweise sind die Optiken entlang einer Kreisbahn oder einer Zylinderbahn angeordnet, bzw. verschiebbar.

Zweckmäßigerweise sind die Lichtquelle und der Bildsensor außerhalb der Sonde angeordnet. Gemäß einer Weiterbildung der Erfindung ist zwischen der Lichtquelle und der Sonde ein LCD-Matrix-Lichtmodulator zum Erzeugen eines Streifenmusters zur Projektion auf die einzelnen Teilansichten angeordnet.

Günstig ist eine Anordnung der Lichtquelle in einem Videoprojektor.

Vorzugsweise ist der Multiplexer ein optischer Muliplexor mit einer Prismen- und/oder Spiegelanordnung. Dabei kann der optische Multiplexer über optische Phaserkabel an die Lichtquelle bzw. den Bildsensor angeschlossen sein. Vorzugsweise ist der Bildsensor eine CCD-Kamera.

Zur Vermessung von beispielsweise gegenüberstehenden Zähnen zwecks Anpassung ihrer beiden Kauflächen ist es zweckmäßig, wenn die Sonde zur Projektion des Lichtes in und zur Aufnahme der reflektierten Lichtmuster aus einander entgegengesetzten Richtungen ausgebildet ist.

Gemäß einer Weiterbildung der Erfindung umfaßt der Rechner Mittel zum Umrechnen der elektrischen Datensignale in Koordinaten. Dabei können die Koordinaten Kugelkoordinaten, beispielsweise für die Vermessung eines einzigen Zahnes, oder Zylinderkoordinaten, beispielsweise zur Vermessung von Zahngruppen, sein. Derartige Koodinaten gewährleisten, daß einander überlappende Meßflächen so gemittelt werden können, daß sie weitgehend absatzfrei ineinander übergehen. Auf diese Weise werden Mehrdeutigkeiten der Messungen ausgeschlossen. Dabei ist es günstig, wenn der Rechner einen Matrixspeicher zur Speicherung der Koordinaten umfaßt.

Zweckmäßigerweise ist die Lichtquelle eine Farblichtquelle oder wenigstens ein Farbfeld ist ihr nachgeschaltet. Wird beispielsweise ein Rotfilter oder Rotlicht verwendet, dann kann beispielsweise bei der Zahnvermessung eine deutliche Unterscheidung zwischen dem roten Zahnfleisch und dem weißen Zahn getroffen werden.

Nachstehend ist die Erfindung anhand einiger Ausführungsbeispiele unter Bezugnahme auf die Zeichnung näher beschrieben. Es zeigen
Figur 1 eine schematische Darstellung eines zur Vermessung von Zähnen mittels einer Mundsonde vorgesehenen Ausführungsbeispiels der erfindungsgemäßen Vorrichtung,
Figur 2 eine Draufsicht auf eine Gruppe von Zähnen,
Figur 3 eine Seitenansicht der Zähne nach Figur 2,
Figur 4 eine Unteransicht der Mundsonde nach Figur 1 als eine erste Variante,
Figur 5 einen Querschnitt der Mundsonde nach Figur 4,
Figur 6 einen Querschnitt einer zweiten Variante der Mundsonde, und
Figur 7 eine Unteransicht einer dritten Variante der Mundsonde, und
Figur 8 und Figur 9 je eine Unteransicht einer vierten Variante der Mundsonde.

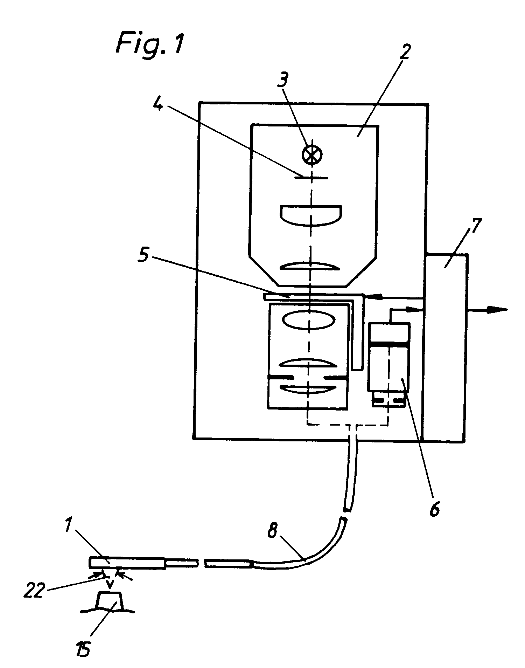

Die in Fig. 1 dargestellte Vorrichtung umfaßt eine in die Mundhöhle eines Patienten einführbare Mundsonde 1, einen Videoprojektor 2 mit einer Lichtquelle 3 in Form einer Glühlampe, einem Rotfilter 4 und einem LCD-Matrix-Lichtmodulator 5, die beide im Strahlengang des Projektors angeordnet sind, einen Bildsensor 6 in Form einer CCD-Kamera, einen Rechner 7 und eine optische Faserkabelverbindung 8 zwischen der Mundsonde 1 und dem Videoprojektor 2 sowie der CCD-Kamera 6.

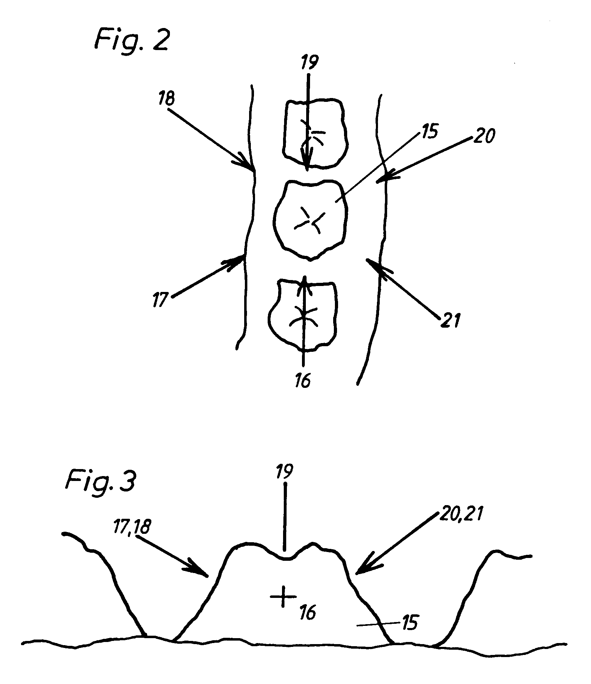

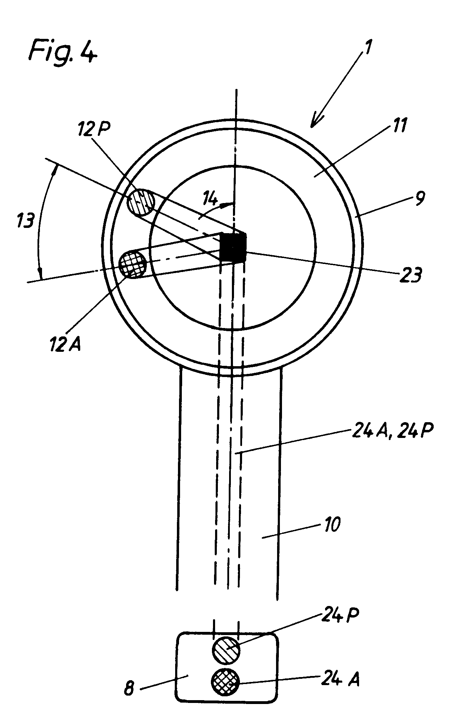

Die in Fig. 4 vergrößert dargestellte Mundsonde 1 besteht aus einem Sondenteil 9 und einem Handgriffteil 10. Der Sondenteil 9 umfaßt einen mittels eines nicht gezeigten programmgesteuerten Drehantriebs schrittweise drehbaren Drehring 11, in welchem zwei gleichartig ausgebildete Mikrooptiken in Form je eines Objektivs 12 mit festgelegtem, jedoch verstellbarem Winkelabstand 13 angeordnet sind. Eines der Objektive dient als Aufnahmeobjektiv 12A und das andere Projektionsobjektiv 12P. Der Drehring 11 ist um jeweils einen definierten Winkelbetrag 14 in vorzugsweise sechs definierte Positionen schrittweise drehbar. Sechs Positionen sind deshalb gewählt, weil es zur vollständigen dreidimensionalen Vermessung eines Zahnes 15 vorteilhaft ist, sechs Teilansichten 16-21 von schräg oben aufzunehmen, wie dies in den Fig. 2 und 3 gezeigt ist. Der Winkelbetrag 14 und damit die jeweils aufzunehmenden Teilansichten können mittels der Programmsteuerung beliebig verändert werden. Ebenfalls verändert werden kann der Winkelabstand 13 zur Verstellung des Parallaxwinkels 22 zwischen dem Projektionsobjektiv 12P und dem Aufnahmeobjektiv 12A. Ein optischer Multiplexer 23 im Sondenteil 9 dient zur optischen Kupplung beider Objektive 12A, 12P mit je einem optischen Faserkabel 24A bzw. 24P, die den Handgriffteil 10 und die sich anschließende Faserkabelverbindung 8 durchlaufen. Das Faserkabel 24P verbindet über den Multiplexer 23 das Projektionsobjektiv 12P mit dem Videoprojektor 2, während das Faserkabel 24A ebenfalls über den Multiplexer 23 den Anschluß des Aufnahmeobjektivs 12A an die CCD-Kamera 6 herstellt.

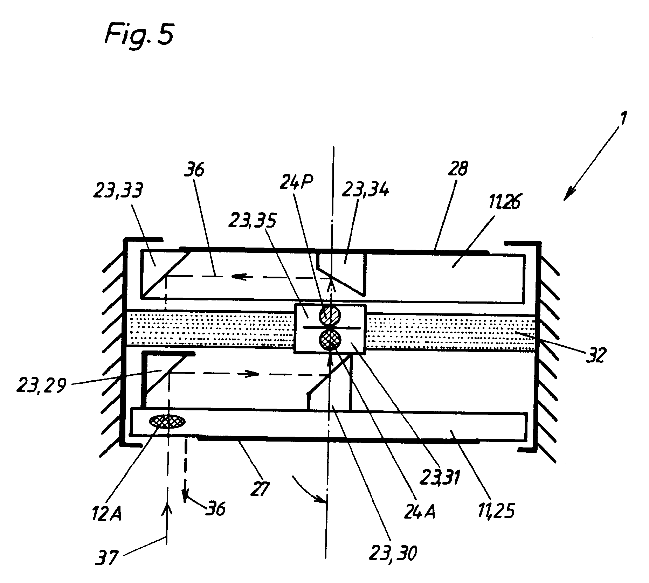

Gemäß Fig. 5 umfaßt der Drehring 11 zwei Drehteller 25, 26, die randseitig gelagert sind, so daß der Bereich ihrer Drehachse frei von mechanischen Einbauten ist. Im Drehteller 25 ist das Aufnahmeobjektiv 12A und im Drehteller 26 das hier nicht gezeigte Projektionsobjektiv 12P, beide um dem Parallaxwinkel 22 versetzt, angeordnet. Die hier lediglich angedeuteten motorischen Antriebe 27,28 für die Drehteller 25,26 sind programmgesteuert und erfolgen entweder über ein Zahnriemensystem von außen oder durch Miniatur-Schrittmotoren. Solche Antriebe sind dem Fachmann bekannt und brauchen hier nicht näher erläutert zu werden.

Der Multiplexer 23 umfaßt zwei Umlenkprismen/Spiegelanordnungen, die je einem der Drehteller 25,26 zugeordnet sind. Die dem Drehteller 25 zugeordnete Anordnung besteht aus zwei auf dem Drehteller 25 montierten Umlenkprismen oder -spiegeln, 29,30 und einem weiteren Umlenkprisma oder -spiegel, das auf einem starr zwischen beiden Drehtellern 25,26 angeordneten durchsichtigen Träger 32 befestigt ist. Die dem Drehteller 26 zugeordnete Anordnung besteht aus zwei am Drehteller 26 montierten Umlenkprismen oder -spiegeln 33,34 und einem weiteren Umlenkprisma oder -spiegel 35, das auf dem durchsichtigen Träger 32 befestigt ist. Die Umlenkprismen oder - spiegel 31,35 sind in der Drehachse des Drehrings 11 angeordnet und optisch mit den Faserkabeln 24A bzw. 24P verbunden. Die Umlenkprismen oder -spiegel 30,34 befinden sich in der Drehachse des Drehringes 11, wobei sie den Umlenkprismen oder - spiegeln 31 bzw. 35 zugeordnet sind. Die Umlenkprismen oder -spiegel 29,33 sind den Objektiven 12A bzw. 12P zugeordnet.

Die Vorrichtung gemäß den Fig. 1,4 und 5 arbeitet nach dem Triangulations- und Phasenshiftverfahren. Beide Verfahren sind bekannt und werden hier nicht näher erläutert.

Der Rechner 7 erzeugt digital ein bestimmtes, programmierbares Streifenmuster, das in einem nicht gezeigten Projektionsbildspeicher digital gespeichert und über eine ebenfalls nicht gezeigte Digital/Analog-Schnittstelle in ein Videosignal zur Ansteuerung des LCD-Matrix-Lichtmodulators 5 im Videoprojektor 2 umgewandelt wird. Dieser LCD-Matrix-Lichtmodulator 5 wird mit dem von der Glühlampe ausgestrahlten Licht durchstrahlt, um dieses punktweise mit hoher Auflösung und einer großen Anzahl von möglichen Graustufen zu modulieren. Das modulierte Licht wird über die Abbildungsoptik des Videoprojektors 2, das optische Faserkabel 24P, die Umlenkprisma/Spiegelanordnung 35,34,33 und das Projektionsobjektiv 12P auf die jeweils eingestellte Teilansicht des zu vermessenden Zahnes 15 in Form eines Streifenmusters projiziert. Der entsprechende Strahlengang ist in Fig. 5 mit dem Bezugszeichen 36 bezeichnet. Das Aufnahmeobjektiv 12A nimmt das reflektierte und entsprechend der Topographie der jeweiligen Teilansicht des zu vermessenden Zahnes 15 verformte und aufgrund der Beobachtung unter dem Parallaxwinkel 22 wahrnehmbare Licht- oder Streifenmuster auf und leitet es entlang dem in der Fig. 5 mit dem Bezugszeichen 37 bezeichneten Strahlengang über die Umlenkprismen/Spiegelanordnung 29,30,31 und das optische Faserkabel 24A der CCD-Kamera 6 zu, die es in elektrische Datensignale umwandelt, die im Rechner in beispielsweise Kugelkoordinaten, deren Ursprung durch die Drehachse des Drehrings 11 bestimmt wird und vorzugsweise im Inneren des Zahnes oder unterhalb desselben liegt, umgerechnet und in einem Matrixspeicher abgelegt werden. Gemäß dem bereits beschriebenen Phasenshiftverfahren wird die vorbeschriebene Aufnahme zweimal wiederholt und die insgesamt ermittelten Meßwerte im Rechner ausgewertet. Anschließend werden die beiden Objektive 12A, 12P durch entsprechende Drehung des Drehrings 11 um den Winkelbetrag 14 nacheinander in die verbleibenden fünf Positionen überführt, um die vorbeschriebenen Aufnahmen für jede Teilansicht jeweils dreimal zu wiederholen. Die insgesamt ermittelten Daten dienen entweder zur Darstellung eines sämtliche aufgenommenen Teilansichten umfassenden Gesamtbildes auf einem Monitor und/oder nach evtl. Korrektur durch den Zahnarzt zur Steuerung einer nicht gezeigten Schleif/Fräseinrichtung, um beispielsweise ein Zahninlay oder -onlay herzustellen. Obwohl die gesamten Aufnahmen nur einen sehr kurzen Zeitraum erfordern, wird die Mundsonde 1 vorzugsweise währenddessen durch den Gegenbiß des Patienten an Ort und Stelle gehalten.

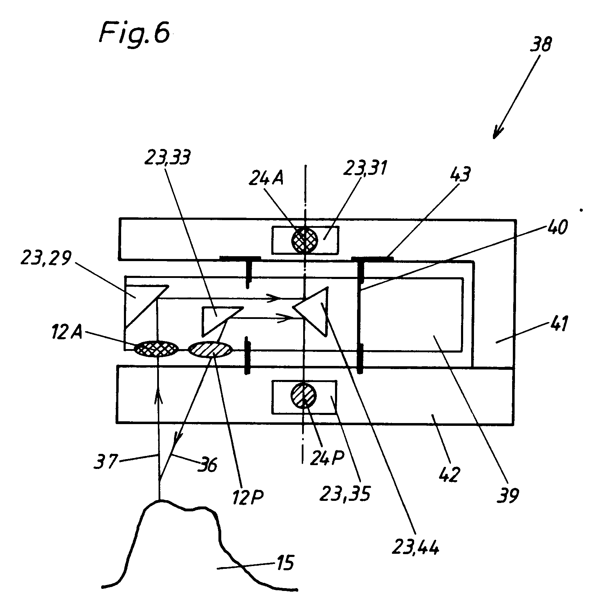

Fig. 6 zeigt eine Mundsonde 38, die sich von der Mundsonde 1 lediglich durch die nachstehend beschriebenen Konstruktionsdetails unterscheidet, im übrigen jedoch die gleiche Funktion aufweist. Der Drehring 11 umfaßt einen einzigen Drehteller 39, der mittels einer Drehachse 40 in einer U-förmigen Anordnung 41 mit einem durchsichtigen Schenkel 42 drehbar gelagert und mittels des Antriebs 43 antreibbar ist. Auf der dem durchsichtigen Schenkel 42 zugewandten Seite des Drehtellers 39 sind außerhalb der Drehachse die Objektive 12A, 12P und die zugeordneten Umlenkprismen oder -spiegel 29 bzw. 33 befestigt. Statt der zwei Umlenkprismen oder -spiegeln 30, 34 gemäß der Mundsonde 1 verwendet die Mundsonde 38 lediglich ein einziges Umlenkprisma oder -spiegel 44, welchem die ebenfalls in der Drehachse, jedoch stationär in den einander gegenüberliegenden Schenkeln der U-förmigen Anordnung 41 befestigten Umlenkprismen oder -spiegel 31,35 zugeordnet sind.

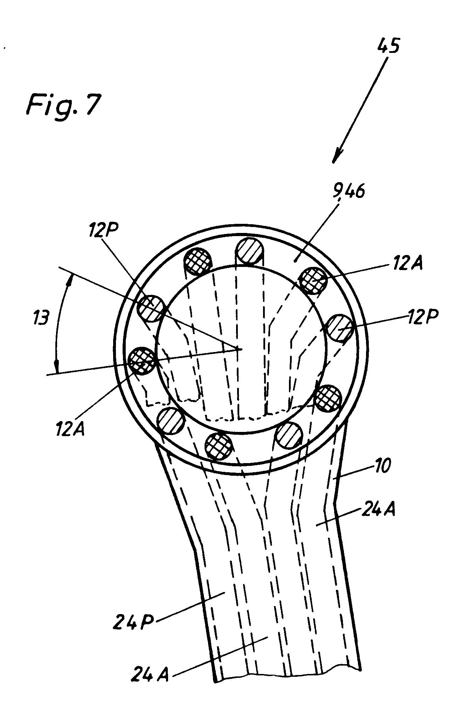

Die in Fig. 7 gezeigte Mundsonde 45 unterscheidet sich von den Mundsonden 1 und 38 durch die nachstehend beschriebenen Konstruktionsmerkmale. Der Sondenteil 9 ist als nicht drehbarer Ring 46 ausgebildet, in welchem die in der Mundsonde nach Fig. 4 verwendete Objektivanordnung bestehend aus dem Aufnahmeobjektiv 12A und dem Projektionsobjektiv 12P in mehrfacher, vorzugsweise sechsfacher Ausfertigung entlang einer Kreisbahn angeordnet ist. Aus Platzgründen sind hier jedoch nur zehn Objektive eingezeichnet. Die Abstände zwischen den einzelnen Objektiven 12 sind wahlweise verstellbar. Ohne Zwischenschaltung eines Multiplexers sind die Aufnahmeobjektive 12A über je ein optisches Faserkabel 24A und sämtliche Projektionsobjektive 12P über je ein optisches Faserkabel 24P an die CCD-Kamera 6 bzw. den Videoprojektor 2 angeschlossen. Diese Mundsonde 45 erlaubt es, sämtliche Teilansichten 16 bis 21 gleichzeitig mit dem Streifenmuster zu beleuchten und das reflektierte Streifenmuster aufzunehmen.

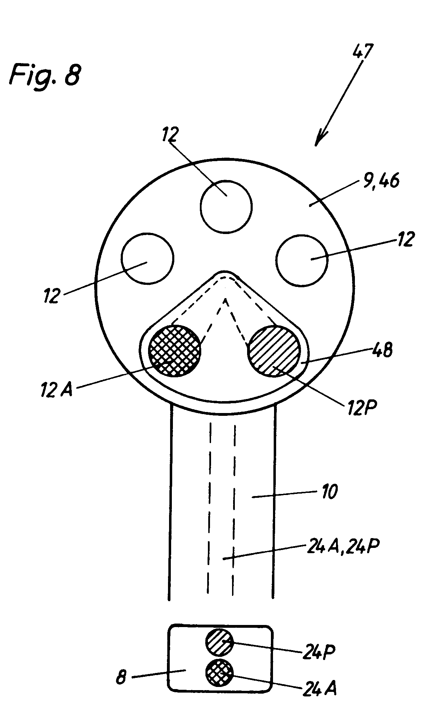

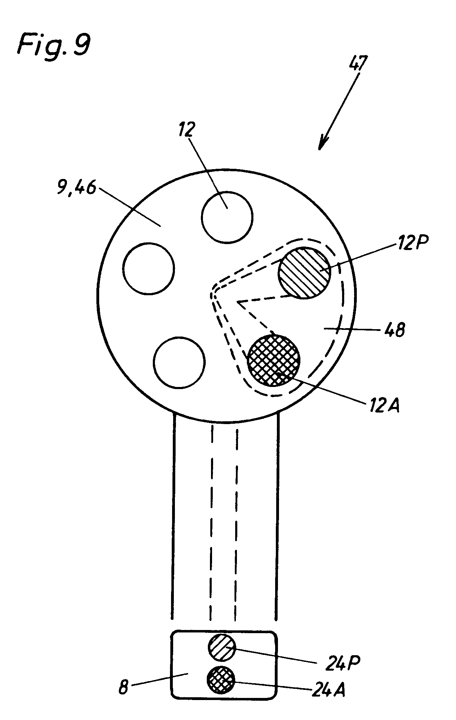

Die in den Fig. 8 und 9 gezeigte Mundsonde 47 unterscheidet sich von der Mundsonde 45 dadurch, daß sie statt fünf Aufnahmeoptiken 12A und fünf zugeordneten Projektionsoptiken 12P lediglich fünf, vorzugsweise jedoch sechs oder sieben Objektive 12 aufweist, die ebenfalls mit gleichmäßigen Abständen entlang einer Kreisbahn auf dem nicht drehbaren Ring 46 angeordnet sind. Ein hier lediglich angedeuteter optischer Multiplexer 48 von prinzipiell gleichem Aufbau wie der vorgeschriebene Multiplexer 23 verbindet jeweils zwei benachbarte Objektive 12 über die optischen Faserkabel 24A und 24P mit der CCD-Kamera 6 bzw. dem Videoprojektor 2. In Fig. 8 dienen die zwei dem Handgriffteil 10 zugewandten Objektive als Aufnahmeobjektiv 12A und Projektionsobjektiv 12P. Nach Drehung um den Winkelbetrag 14 entgegen dem Uhrzeigersinn in die in Fig. 9 gezeigte Stellung verbindet der Multiplexer 48 das in der vorhergehenden Stellung zur Projektion dienende Objektiv, das nun als Aufnahmeobjektiv 12A eingesetzt wird, mit dem benachbarten Objektiv, das in dieser Stellung als Projektionsobjektiv 12P dient. Durch weitere schrittweise Drehung jeweils um den Winkelbetrag 14 werden die verbleibenden Objektive 12 jeweils paarweise zur Projektion des Streifenmusters auf die verbleibenden Teilansichten und zur Aufnahme der reflektierten Streifenmuster verwendet. Dabei sind ebenso wie bei dem Einsatz der vorbeschriebenen Mundsonden 1, 38 und 45 keinerlei Hilfsmittel, wie etwa Kalibrationskörper, erforderlich, da sämtliche Teilansichten mit großer Genauigkeit aus exakt definierten Positionen der jeweiligen Mundsonde sowie der Aufnahmeobjektive 12A und Projektionsobjektive 12P aufgenommen werden und somit zu einem absolut vermaßten 2D-Modell rechnerisch zusammengesetzt werden können.

## Patentansprüche

1. Verfahren zur dreidimensionalen optischen Vermessung von Oberflächen bzw. Körpern, insbesondere von Zähnen oder Zahngruppen in der Mundhöhle von Patienten, wobei sämtliche Teilansichten des zu vermessenden Körpers mit Hilfe wenigstens zweier mit festgelegtem Abstand in einer Sonde einander zugeordneten Optiken mit von einer Lichtquelle ausgestrahltem Licht, insbesondere in Form eines Streifenmusters, beleuchtet und die von den Teilansichten reflektierten Lichtmuster unter einem dem Abstand zwischen beiden Optiken entsprechenden Parallaxwinkel aufgenommen sowie einem Bildsensor zugeführt werden, der die Lichtmuster in elektrische Datensignale umwandelt, die in einem Rechner zur Erstellung einer sämtliche Teilansichten umfassenden bzw. den vermessenen Körper darstellenden Gesamtabbildung ausgewertet werden,
**dadurch gekennzeichnet,**
daß die Beleuchtung der einzelnen Teilansichten und die Aufnahme der jeweils reflektierten Lichtmuster durchgeführt wird: entweder nacheinander mittels der wenigstens zwei Optiken, welche zu diesem Zweck innerhalb der Sonde aufeinanderfolgend in definierte, den einzelnen Teilansichten zugeordnete Positionen verschoben werden, oder gleichzeitig oder nacheinander mit mehr als zwei Optiken, die innerhalb der Sonde ortsfest in definierten, den einzelnen Teilansichten jeweils zugeordneten Positionen angebracht sind,
wobei die Sonde in einer einzigen und damit bezüglich der gegenseitigen Zuordnung der einzelnen Teilansichten definierten Position gehalten wird.

2. Verfahren nach Anspruch 1,
**dadurch gekennzeichnet,**
daß das Prinzip der Triangulation angewendet wird, wobei mittels wenigstens der einen Optik ein Streifenmuster auf die einzelnen Teilansichten projiziert und mittels wenigstens der anderen Optik das jeweils reflektierte, entsprechend der Topographie der jeweils vermessenen Teilansicht verformte Streifenmuster aufgenommen und als Grundlage zur Erzeugung der elektrischen Datensignale verwendet wird.

3. Verfahren nach Anspruch 1 oder 2,
**dadurch gekennzeichnet,**
daß das Phasenshift-Prinzip angewendet wird, bei dem ein Streifenmuster mit einer durch eine Sinuskurve darstellbaren Helligkeitsverteilung mit jeweils verschobener Phase wenigstens dreimal auf jede Teilansicht projiziert und das reflektierte Streifenmuster aufgenommen wird.

4. Vorrichtung zur Durchführung des Verfahrens nach wenigstens einem der Ansprüche 1-3, mit wenigstens einer Lichtquelle (3) zum Emittieren von Licht, einer Sonde (1) mit wenigstens zwei mit festgelegtem Abstand einander zugeordneten Optiken (12A,12P) zum Beleuchten sämtlicher Teilansichten des zu vermessenden Körpers mit dem Licht, inbesondere in Form eines Streifenmusters, und zum Aufnehmen der von den Teilansichten reflektierten Lichtmuster unter einem dem Abstand zwischen den Optiken entsprechenden Parallaxwinkel, einem Bildsensor (6) zum Umwandeln der reflektierten Lichtmuster in elektrische Datensignale und einem Rechner (7) zum Auswerten der elektrischen Datensignale zwecks Erstellung einer sämtliche Teilansichten umfassenden bzw. den vermessenden Körper darstellenden Gesamtabbbildung,
**dadurch gekennzeichnet,**
daß die Zahl der jeweils zwei mit festgelegtem Abstand einander paarweise zugeordneten Optiken (12A,12P) gleich der Anzahl der Teilansichten (16-21) und ihre Anordnung innerhalb der Sonde(45) ortsfest sowie gleich der gegenseitigen Anordnung der Teilansichten (16-21) ist, und daß jeweils die eine (12P)der paarweise zugeordneten Optiken an die Lichtquelle (3) und die andere (12A) an den Bildsensor (6) angeschlossen ist (Fig. 7)

5. Vorrichtung zur Durchführung des Verfahrens nach wenigstens einem der Ansprüche 1-3, mit wenigstens einer Litchquelle (3) zum Emittieren von Licht, einer Sonde (1) mit wenigstens zwei mit festgelegtem Abstand einander zugeordneten Optiken (12P,12A) zum Beleuchten sämtlicher Teilansichten des zu vermessenden Körpers mit dem Licht, inbesondere in Form eines Streifenmusters, und zum Aufnehmen der von den Teilansichten reflektierten Lichtmuster unter einem dem Abstand zwischen den Optiken entsprechenden Parallaxwinkel, einem Bildsensor (6) zum Umwandeln der reflektierten Lichtmuster in elektrische Datensignale und einem Rechner (7) zum Auswerten der elektrischen Datensignale zwecks Erstellung einer sämtliche Teilansichten umfassenden bzw. den vermessenden Körper darstellenden Gesamtabbbildung,
**dadurch gekennzeichnet,**
daß die Zahl der Optiken (12P,12A) gleich der Anzahl der Teilansichten (16-21) und ihre Anordnung innerhalb der Sonde (47) ortsfest und gleich der gegenseitigen Anordnung der Teilansichten (16-21) ist, und daß ein Multiplexer (48) zum paarweisen gleichzeitigen Anschließen jeweils zweier Optiken (12P,12A) an die Lichtquelle (3) bzw. an den Bildsensor (6) vorgesehen ist. (Fig. 8 und 9)

6. Vorrichtung zur Durchführung des Verfahrens nach wenigstens einem der Ansprüche 1-3, mit wenigstens einer Lichtquelle (3) zum Emittieren von Licht, einer Sonde (1) mit wenigstens zwei mit festgelegtem Abstand einander zugeordneten Optiken (12P,12A) zum Beleuchten sämtlicher Teilansichten des zu vermessenden Körpers mit dem Licht, inbesondere in Form eines Streifenmusters, und zum Aufnehmen der von den Teilansichten reflektierten Lichtmuster unter einem dem Abstand zwischen den Optiken entsprechenden Parallaxwinkel, einem Bildsensor (6) zum Umwandeln der reflektierten Lichtmuster in elektrische Datensignale und einem Rechner (7) zum Auswerten der elektrischen Datensignale zwecks Erstellung einer sämtliche Teilansichten umfassenden bzw. den vermessenden Körper darstellenden Gesamtabbbildung,
**dadurch gekennzeichnet,**
daß die wenigstens zwei mit festgelegtem Abstand einander paarweise zugeordneten Optiken (12A,12P) in definierten, der Breite der Teilansichten (16-21) entsprechenden Schritten innerhalb der Sonde (1) entlang einer der gegenseitigen Anordnung der Teilansichten (16-21) zugeordneten Bahn verschiebbar und über einen Multiplexer (23) an die Lichtquelle (3) bzw. an den Bildsensor (6) anschließbar sind. (Fig. 1,4-6)

7. Vorrichtung nach wenigstens einem der Ansprüche 4,5 bzw. 6
**dadurch gekennzeichnet,**
daß die Optiken (12;12A,12P) entlang einer Kreisbahn oder Zylinderbahn angeordnet bzw. verschiebbar sind.

8. Vorrichtung nach wenigstens einem der Ansprüche 4 bis 7,
**dadurch gekennzeichnet,**
daß die Lichtquelle (3) und der Bildsensor (6) außerhalb der Sonde (1,38,45,47) angeordnet sind.

9. Vorrichtung nach wenigstens einem der Ansprüche 4 bis 8,
**dadurch gekennzeichnet,**
daß zwischen der Lichtquelle (3)und der Sonde (1,38,45,47) ein LCD-Matrix-Lichtmodulator (5) zum Erzeugen eines Streifenmusters zur Projektion auf die einzelnen Teilansichten (16-21) angeordnet ist.

10. Vorrichtung nach Anspruch 8 oder 9,
**dadurch gekennzeichnet,**
daß die Lichtquelle (3) in einem Videoprojektor (2) angeordnet ist.

11. Vorrichtung nach wenigstens einem der Ansprüche 4 bis 10,
**dadurch gekennzeichnet,**
daß der Multiplexer (23,48) ein optischer Multiplexer mit einer Umlenkprismen-und/oder Spiegelanordnung (29-31,33-35,44) ist.

12. Vorrichtung nach Anspruch 11,
**dadurch gekennzeichnet,**
daß der optische Multiplexer (23,48) über optische Faserkabel (24A,24P) an die Lichtquelle (3) bzw. den Bildsensor (6) angeschlossen ist.

13. Vorrichtung nach wenigstens einem der Ansprüche 4 bis 12,
**dadurch gekennzeichnet,**
daß der Bildsensor (6) eine CCD-Kamera ist.

14. Vorrichtung nach wenigstens einem der Ansprüche 4 bis 13,
**dadurch gekennzeichnet,**
daß die Sonde zur Projektion des Lichtes in und zur Aufnahme der reflektierten Streifenmuster aus einapeerl entgegengesetzten Richtungen ausgebildet ist.

15. Vorrichtung nach wenigstens einem der Ansprüche 4 bis 14
**dadurch gekennzeichnet,**
daß der Rechner (7) Mittel zum Umrechnen der elektrischen Datensignale in Koordinaten umfaßt.

16. Vorrichtung nach Anspruch 15,
**dadurch gekennzeichnet,**
daß die Koordinaten Kugelkoordinaten sind.

17. Vorrichtung nach Anspruch 15,
**dadurch gekennzeichnet,**
daß die Koordinaten Zylinderkoordinaten sind.

18. Vorrichtung nach wenigstens einem der Ansprüche 15 bis 17,
**dadurch gekennzeichnet,**
daß der Rechner (7) einen Matrixspeicher zur Speicherung der Koordinaten umfaßt.

19. Vorrichtung nach wenigstens einem der Ansprüche 4 bis 18,
dadurch gekennzeichnet,
daß die Lichtquelle (3) eine Farblichtquelle ist oder daß ihr wenigstens ein Farbfilter (4) nachgeschaltet ist.

## Claims

1. Process for the three-dimensional optical measurement of surfaces or bodies, in particular of teeth or tooth groups in the oral cavity of patients, with all the partial views of the body to be measured being illuminated with light emitted from a light source, in particular in the form of a striated pattern, with the aid of at least two optical systems associated with one another at a fixed distance in a probe, and the light patterns reflected from the partial views being imaged at a parallax angle corresponding to the distance between the two optical systems and being supplied to an image sensor which converts the light patterns into electrical data signals which are evaluated in a computer for the provision of a total image encompassing all the partial views and representing the measured body,
characterized in that
the illumination of the individual partial views and the imaging of the respectively reflected light patterns is carried out: either one after the other by means of the at least two optical systems, which for this purpose are displaced within the probe successively into defined positions associated with the individual partial views, or at the same time or after one another with more than two optical systems which are fitted within the probe in a fixed manner in defined positions respectively associated with the individual partial views, with the probe being held in a single position which is therefore defined with respect to the mutual association of the individual partial views.

2. Process according to claim 1,
characterized in that
the principle of triangulation is applied, in which by means of at least the one optical system a striated pattern is projected on to the individual partial views and by means of at least the other optical system the respectively reflected striated pattern formed corresponding to the topography of the respectively measured partial view is imaged and is used as the basis for generating the electrical data signals.

3. Process according to claim 1 or 2,
characterized in that
the phase shift principle is applied, where a striated pattern with a brightness distribution which can be represented by a sine curve with in each case displaced phase is projected at least three times on to each partial view and the reflected striated pattern is imaged.

4. Device for carrying out the process according to at least one of claims 1-3, having at least one light source (3) for emitting light, a probe (1) with at least two optical systems (12A, 12P), associated with one another at a fixed distance, for illuminating all the partial views of the body to be measured with the light, in particular in the form of a striated pattern, and for imaging the light patterns reflected from the partial views at a parallax angle corresponding to the distance between the optical systems, an image sensor (6) for converting the reflected light patterns into electrical data signals and a computer (7) for evaluating the electrical data signals for the purpose of providing a total image encompassing all the partial views and representing the measuring body,
characterized in that
the number of paired optical systems (12A, 12P), in each case with two optical systems associated with one another at a fixed distance, equals the number of partial views (16-21) and their arrangement within the probe (45) is fixed and is the same as the opposite arrangement of the partial views (16-21), and in that in each case one (12P) of the paired optical systems is connected to the light source (3) and the other one (12A) to the image sensor (6) (Figure 7).

5. Device for carrying out the process according to at least one of claims 1-3, having at least one light source (3) for emitting light, a probe (1) with at least two optical systems (12P, 12A), associated with one another at a fixed distance, for illuminating all the partial views of the body to be measured with the light, in particular in the form of a striated pattern, and for imaging the light patterns reflected from the partial views at a parallax angle corresponding to the distance between the optical systems, an image sensor (6) for converting the reflected light patterns into electrical data signals and a computer (7) for evaluating the electrical data signals for the purpose of providing a total image encompassing all the partial views and representing the measuring body,
characterized in that
the number of optical systems (12P, 12A) equals the number of partial views (16-21) and their arrangement within the probe (47) is fixed and equals the opposite arrangement of the partial views (16-21), and in that a multiplexer (48) is provided for the paired simultaneous connection of each two optical systems (12P, 12A) to the light source (3) and to the image sensor (6) (Figures 8 and 9).

6. Device for carrying out the process according to at least one of claims 1-3, having at least one light source (3) for emitting light, a probe (1) with at least two optical systems (12P, 12A), associated with one another at a fixed distance, for illuminating all the partial views of the body to be measured with the light, in particular in the form of a striated pattern, and for imaging the light patterns reflected from the partial views at a parallax angle corresponding to the distance between the optical systems, an image sensor (6) for converting the reflected light patterns into electrical data signals and a computer (7) for evaluating the electrical data signals for the purpose of providing a total image encompassing all the partial views and representing the measuring body,
characterized in that
the at least two optical systems (12A, 12P) in paired association with one another at a fixed distance can be displaced in defined steps corresponding to the width of the partial views (16-21) within the probe (1) along a path associated with the opposite arrangement of the partial views (16-21) and can be connected by way of a multiplexer (23) to the light source (3) and to the image sensor (6) (Figures 1, 4-6).

7. Device according to at least one of claims 4, 5 and 6,
characterized in that
the optical systems (12; 12A, 12P) are arranged and are displaceable along a circular path or cylindrical path.

8. Device according to at least one of claims 4 to 7,
characterized in that
the light source (3) and the image sensor (6) are arranged outside the probe (1, 38, 45, 47).

9. Device according to at least one of claims 4 to 8,
characterized in that
a LCD matrix light modulator (5) for generating a striated pattern for projection on to the individual partial views (16-21) is arranged between the light source (3) and the probe (1, 38, 45, 47).

10. Device according to claim 8 or 9,
characterized in that
the light source (3) is arranged in a video projector (2).

11. Device according to at least one of claims 4 to 10,
characterized in that
the multiplexer (23, 48) is an optical multiplexer with a deviating prism arrangement and/or mirror arrangement (29-31, 33-35, 44).

12. Device according to claim 11,
characterized in that
the optical multiplexer (23, 48) is connected by way of optical fibre cables (24A, 24P) to the light source (3) and the image sensor (6).

13. Device according to at least one of claims 4 to 12,
characterized in that
the image sensor (6) is a CCD camera.

14. Device according to at least one of claims 4 to 13,
characterized in that
the probe is constructed for projecting the light in and for imaging the reflected striated patterns from opposite directions.

15. Device according to at least one of claims 4 to 14,
characterized in that
the computer (7) comprises means for converting the electrical data signals into coordinates.

16. Device according to claim 15,
characterized in that
the coordinates are spherical coordinates.

17. Device according to claim 15,
characterized in that
the coordinates are cylindrical coordinates.

18. Device according to at least one of claims 15 to 17,
characterized in that
the computer (7) comprises a matrix memory for storing the coordinates.

19. Device according to at least one of claims 4 to 18,
characterized in that
the light source (3) is a colour-light source or in that at least one colour filter (4) is connected downstream.

## Revendications

1. Dispositif pour le mesurage optique tridimensionnel de surfaces ou corps, en particulier de dents ou groupes de dents dans la cavité buccale de patients, toutes les vues partielles du corps à mesurer étant éclairées à l'aide d'au moins deux optiques associées l'une à l'autre à une distance prédéterminée dans une sonde, avec de la lumière émise par une source lumineuse, en particulier sous la forme d'un motif à bandes, et les motifs lumineux réfléchis par les vues partielles étant captés sous un angle de parallaxe correspondant à la distance entre les deux optiques et amenés à un détecteur d'image qui transforme les motifs lumineux en signaux électriques exploités dans un calculateur en vue de l'établissement d'une reproduction d'ensemble comprenant toutes les vues partielles ou représentant le corps à mesurer, caractérisé par le fait que l'éclairement des différentes vues partielles et la détection des motifs lumineux réfléchis sont effectués, soit successivement au moyen d'au moins deux optiques qui sont déplacées à l'intérieur de la sonde successivement dans des positions définies associées aux différentes vues partielles, soit simultanément ou successivement au moyen de plus de deux optiques qui sont disposées de façon fixe à l'intérieur de la sonde dans des positions définies associées aux différentes vues partielles, la sonde étant maintenue dans une position unique et donc définie en ce qui concerne l'association réciproque des différentes vues partielles.

2. Procédé suivant la revendication 1, caractérisé par le fait qu'on applique le principe de la triangulation, en projetant à l'aide de l'une au moins des optiques, un motif à bandes sur les différentes vues partielles et en détectant, à l'aide de la ou de chaque autre optique et en utilisant comme base pour produire des signaux électriques, chaque motif à bandes réfléchi, déformé en fonction de la topographie de la vue partielle mesurée.

3. Procédé suivant la revendication 1 ou 2, caractérisé par le fait qu'on applique le principe du déphasage en projetant un motif à bandes avec une répartition d'intensité lumineuse représentative par une courbe sinusoïde, chaque fois avec déphasage, au moins trois fois sur chaque vue partielle et en détectant le motif à bandes réfléchi.

4. Dispositif pour la mise en oeuvre du procédé suivant au moins l'une des revendications 1 à 3, comprenant au moins une source lumineuse (3) pour émettre de la lumière, une sonde (1) avec au moins deux optiques (12A, 12P) associées l'une à l'autre à une distance déterminée pour éclairer toutes les vues partielles du corps à mesurer à l'aide de la lumière, en particulier sous forme d'un motif à bandes, et pour capter les motifs lumineux réfléchis par les vues partielles sous un angle de parallaxe correspondant à la distance entre les optiques, un détecteur d'image (6) pour convertir les motifs lumineux réfléchis en signaux électriques et un calculateur (7) pour exploiter les signaux électriques en vue de l'établissement d'une reproduction d'ensemble comprenant toutes les vues partielles ou représentant le corps à mesurer, caractérisé par le fait que le nombre des optiques (12A, 12P) associées par paires l'une à l'autre à une distance déterminée est égal au nombre des vues partielles (16 à 21) et leur disposition à l'intérieur de la sonde (45) est fixe et égale à la disposition réciproque des vues partielles (16 à 21), et qu'à chaque fois l'une (12P) des optiques associées par paires est reliée à la source lumineuse (3) et l'autre (12A) au détecteur d'image (6) (figure 7).

5. Dispositif pour la mise en oeuvre du procédé suivant au moins l'une des revendications 1 à 3, comprenant au moins une source lumineuse (3) pour émettre de la lumière, une sonde (1) avec au moins deux optiques (12A, 12P) associées l'une à l'autre à une distance déterminée pour éclairer toutes les vues partielles du corps à mesurer à l'aide de la lumière, en particulier sous forme d'un motif à bandes, et pour capter les motifs lumineux réfléchis par les vues partielles sous un angle de parallaxe correspondant à la distance entre les optiques, un détecteur d'image (6) pour convertir les motifs lumineux réfléchis en signaux électriques et un calculateur (7) pour exploiter les signaux électriques en vue de l'établissement d'une reproduction d'ensemble comprenant toutes les vues partielles ou représentant le corps à mesurer, caractérisé par le fait que le nombre des optiques (12P, 12A) est égal au nombre des vues partielles (16 à 21) et leur disposition à l'intérieur de la sonde (47) est fixe et égale à la disposition réciproque des vues partielles (16 à 21), et qu'il est prévu un multiplexeur (48) pour le raccordement simultané par paires de chaque fois deux optiques (12P, 12A) à la source lumineuse (3) et au détecteur d'image (6) (figures 8 et 9).

6. Dispositif pour la mise en oeuvre du procédé suivant au moins l'une des revendications 1 à 3, comprenant au moins une source lumineuse (3) pour émettre de la lumière, une sonde (1) avec au moins deux optiques (12A, 12P) associées l'une à l'autre à une distance déterminée pour éclairer toutes les vues partielles du corps à mesurer à l'aide de la lumière, en particulier sous forme d'un motif à bandes, et pour capter les motifs lumineux réfléchis par les vues partielles sous un angle de parallaxe correspondant à la distance entre les optiques, un détecteur d'image (6) pour convertir les motifs lumineux réfléchis en signaux électriques et un calculateur (7) pour exploiter les signaux électriques en vue de l'établissement d'une reproduction d'ensemble comprenant toutes les vues partielles ou représentant le corps à mesurer, caractérisé par le fait que les optiques (12A, 12P) au nombre de deux au moins, associées par paires l'une à l'autre à une distance déterminée, sont déplaçables par pas définis correspondant à la largeur des vues partielles (16 à 21), à l'intérieur de la sonde (1) le long d'un trajet associé à la disposition réciproque des vues partielles (16 à 21), et peuvent être reliées par un multiplexeur (23) à la source lumineuse (3) et au détecteur d'image (6) (figures 1, 4 à 6).

7. Dispositif suivant au moins l'une des revendications 4, 5 ou 6, caractérisé par le fait que les optiques (12; 12A, 12P) sont disposées déplaçables le long d'un trajet circulaire ou cylindrique.

8. Dispositif suivant au moins l'une des revendications 4 à 7, caractérisé par le fait que la source lumineuse (3) et le détecteur d'image (6) sont disposés à l'extérieur de la sonde (1, 38, 45, 47).

9. Dispositif suivant au moins l'une des revendications 4 à 8, caractérisé par le fait qu'un modulateur de lumière (5) à matrice LCD est disposé entre la source lumineuse (3) et la sonde (1, 38, 45, 47) en vue de la production d'un motif à bandes pour la projection sur les différentes vues partielles (16 à 21).

10. Dispositif suivant la revendication 8 ou 9, caractérisé par le fait que la source lumineuse (3) est disposée dans un vidéoprojecteur (2).

11. Dispositif suivant au moins l'une des revendications 4 à 10, caractérisé par le fait que le multiplexeur (23, 48) est un multiplexeur optique avec un agencement de prismes de déviation et/ou de miroirs (29 à 31, 33 à 35, 44).

12. Dispositif suivant la revendication 11, caractérisé par le fait que le multiplexeur optique (23, 48) est relié par des câbles de fibres optiques (24A, 24P) à la source lumineuse (3) et au détecteur d'image (6).

13. Dispositif suivant au moins l'une des revendications 4 à 12, caractérisé par le fait que le détecteur d'image (6) est une caméra CCD.

14. Dispositif suivant au moins l'une des revendications 4 à 13, caractérisé par le fait que la sonde est réalisée pour projeter la lumière dans et pour capter les motifs à bandes réfléchi depuis des directions opposées.

15. Dispositif suivant au moins l'une des revendications 4 à 14, caractérisé par le fait que le calculateur (7) comporte des moyens pour convertir les signaux électriques en coordonnées.

16. Dispositif suivant la revendication 15, caractérisé par le fait que les coordonnées sont des coordonnées sphériques.

17. Dispositif suivant la revendication 15, caractérisé par le fait que les coordonnées sont des coordonnées cylindriques.

18. Dispositif suivant au moins l'une des revendications 15 à 17, caractérisé par le fait que le calculateur (7) comprend une mémoire matricielle pour mémoriser les coordonnées.

19. Dispositif suivant au moins l'une des revendications 4 à 18, caractérisé par le fait que la source lumineuse (3) est une source de lumière colorée ou qu'elle est suivie d'au moins un filtre de couleur (4).
